# EUROPEAN PATENT APPLICATION

(11) **EP 4 800 486 A1**
(43) Date of publication of application: **02.09.2026**
(21) Application number: 26159961.7
(22) Date of filing: 20.02.2026
(51) Int. Cl.: G03G 15/08

(54) **IMAGE FORMING APPARATUS CAPABLE OF SUPPRESSING INCREASE OF NUMBER OF PORTS OF CONTROL PORTION AND SUPPRESSING INCREASE OF NUMBER OF TYPES OF SUBSTRATES**

(30) Priority: 27.02.2025 JP 2025030108
(71) Applicant: KYOCERA Document Solutions Inc., Osaka-shi, Osaka 540-8585 (JP)
(72) Inventor: Sasaki, Shunsuke, Osaka-shi, 540-8585 (JP); Shinba, Minoru, Osaka-shi, 540-8585 (JP)
(74) Representative: Plougmann Vingtoft a/s

(57) **Abstract**

An image forming apparatus includes a plurality of units, a control portion and a switching portion. The plurality of units share in executing part or all of an image forming process. The control portion accesses a non-volatile storage portion provided in each of the units. The switching portion switches a connection target connected to the control portion via one communication line between the plurality of storage portions corresponding to the plurality of units.

## Description

### BACKGROUND

The present disclosure relates to an image forming apparatus.

An image forming apparatus is known that includes a plurality of units, such as a developing unit, used to form an image. In addition, an image forming apparatus is known that includes a control portion that can access a non-volatile storage portion provided in each of the units.

### SUMMARY

An image forming apparatus according to one aspect of the present disclosure includes a plurality of units, a control portion, and a switching portion. The plurality of units share in executing part or all of an image forming process. The control portion accesses a non-volatile storage portion provided in each of the units. The switching portion switches a connection target connected to the control portion via one communication line between the plurality of storage portions corresponding to the plurality of units.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a cross-sectional view showing a configuration of an image forming apparatus of an embodiment according to the present disclosure.
FIG. 2 is a cross-sectional view showing a configuration of an image forming portion of an image forming apparatus of an embodiment according to the present disclosure.
FIG. 3 is a diagram showing communication paths between a control portion and a plurality of non-volatile memories of an image forming apparatus of an embodiment according to the present disclosure.
FIG. 4 is a diagram showing a correspondence between switch changeover signals and connection targets connected to a control portion and addresses assigned to each non-volatile memory in an image forming apparatus of an embodiment according to the present disclosure.

### DETAILED DESCRIPTION

Hereinafter, embodiments according to the present disclosure will be described with reference to the drawings. Note that the following embodiments are examples of a specific embodiment according to the present disclosure, and do not limit the technical scope of the present disclosure.

### [Configuration of Image Forming Apparatus 100]

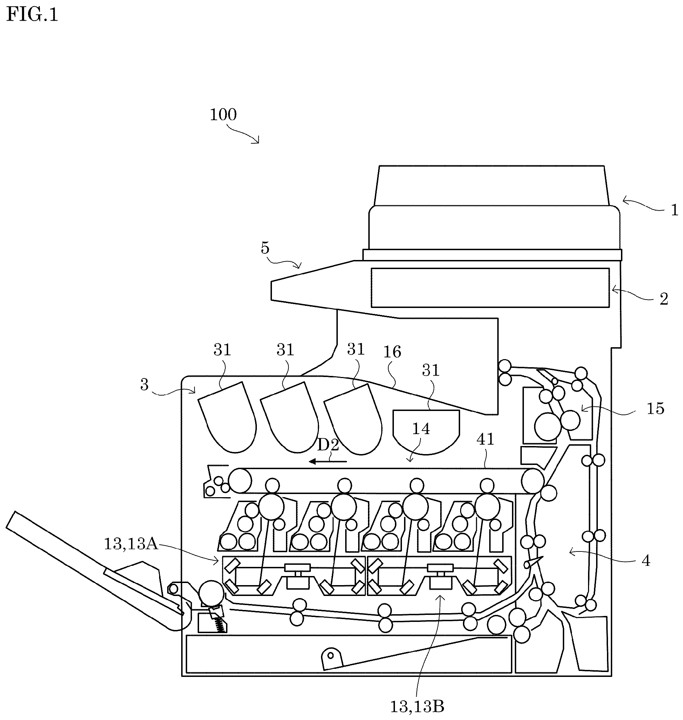

First, a configuration of an image forming apparatus 100 of an embodiment according to the present disclosure will be described with reference to FIG. 1.

The image forming apparatus 100 is a multifunction peripheral having multiple functions, such as a scanning function for reading an image of a document, a printing function for forming an image based on image data, a fax function, a copy function, and the like. Note that the technique according to the present disclosure may be applied to image forming apparatuses such as printers, fax machines, and copiers.

As shown in FIG. 1, the image forming apparatus 100 includes an auto document feeder (ADF) 1, an image reading portion 2, an image forming portion 3, a sheet feed portion 4, and an operation display portion 5.

The ADF 1 conveys a document to be read by the scanning function. The ADF 1 includes a document setting portion, a plurality of conveying rollers, a document holder, and a sheet discharge portion.

The image reading portion 2 achieves the scanning function. The image reading portion 2 includes a document table, a light source, a plurality of mirrors, an optical lens, and a charge coupled device (CCD).

The image forming portion 3 achieves the printing function. More specifically, the image forming portion 3 forms an image on a sheet fed from the sheet feed portion 4 in accordance with an electrophotographic method. The image forming portion 3 forms a color image using toner of four colors: yellow (Y), magenta (M), cyan (C), and black (K).

The sheet feed portion 4 supplies sheets to the image forming portion 3. The sheet feed portion 4 includes a sheet feed cassette, a manual feed tray, and a plurality of conveying rollers.

The operation display portion 5 is a user interface of the image forming apparatus 100. The operation display portion 5 has a display portion such as a liquid crystal display that displays various types of information in response to control instructions from a main control portion (not shown), and an operation portion such as operation keys, a touch panel, or the like that inputs various types of information to the main control portion in response to user operations.

### [Configuration of Image Forming Portion 3]

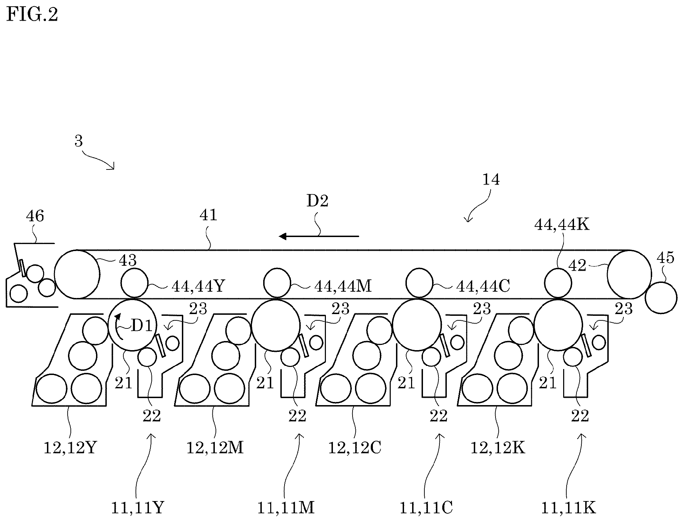

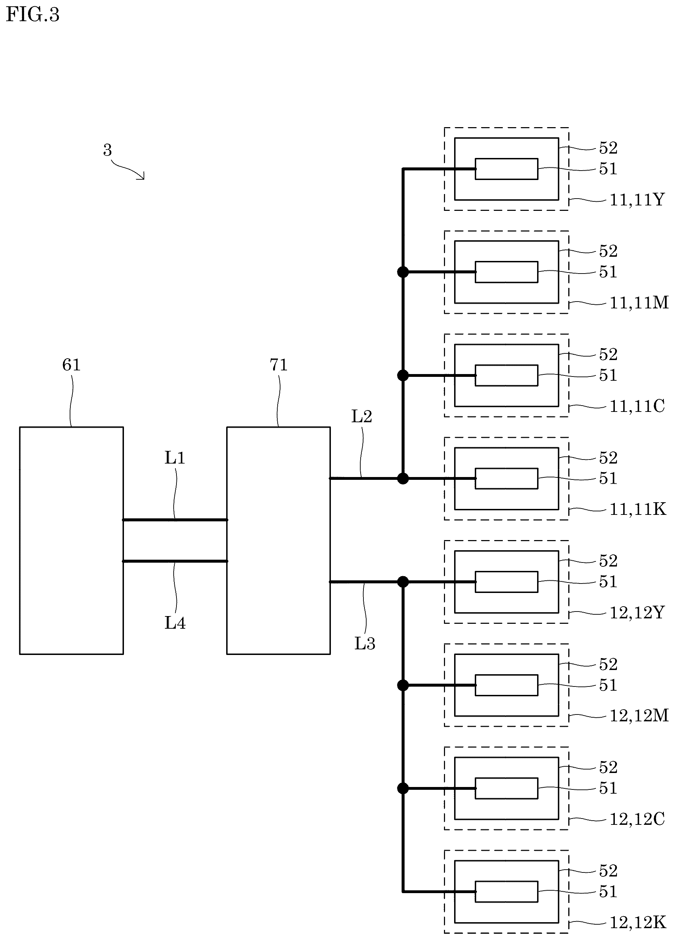

Next, a configuration of the image forming portion 3 will be described with reference to FIGS. 1 to 3. Here, FIG. 2 is a cross-sectional view showing a configuration of four drum units 11, four developing units 12, and a transfer unit 14. Note that in FIG. 3, each drum unit 11 and each developing unit 12 are indicated by dashed lines.

As shown in FIG. 1 and FIG. 2, the image forming portion 3 includes four drum units 11 (11Y, 11M, 11C, 11K) corresponding to the four printing colors, four developing units 12 (12Y, 12M, 12C, 12K) corresponding to the four printing colors, two optical scanning units 13 (13A, 13B), a transfer unit 14, a fixing unit 15, and a sheet discharge tray 16. In addition, the image forming portion 3 also includes a control portion 61 shown in FIG. 3. In the image forming portion 3, the four drum units 11, the four developing units 12, the two optical scanning units 13, the transfer unit 14, and the fixing unit 15 share and execute the electrophotographic image forming process (charging process, exposing process, developing process, transfer process, and fixing process). Note that the image forming process according to the present disclosure may include an electric charge discharging process for discharging the electric charge of the photoconductor drum 21, a first cleaning process for cleaning the photoconductor drum 21, and a second cleaning process for cleaning an intermediate transfer belt 41.

Each drum unit 11 executes a charging process in the electrophotographic image forming process.

As shown in FIG. 2, each drum unit 11 includes a photoconductor drum 21, a charging roller 22, and a drum cleaning portion 23.

An electrostatic latent image is formed on a surface of the photoconductor drum 21. The photoconductor drum 21 receives a rotational driving force supplied from a motor (not shown) and rotates in a drum rotation direction D1 shown in FIG. 2. Thus, the photoconductor drum 21 carries the electrostatic latent image formed on the surface. The charging roller 22 charges the surface of the photoconductor drum 21.

Each of the optical scanning units 13 executes an exposing process in the electrophotographic image forming process.

More specifically, the optical scanning unit 13A emits light based on image data toward the drum unit 11Y and the drum unit 11M. In addition, the optical scanning unit 13B emits light based on image data toward the drum unit 11C and the drum unit 11K. The light emitted from the optical scanning unit 13A and the optical scanning unit 13B is irradiated onto the four photoconductor drums 21 that have been charged in advance. Thus, an electrostatic latent image is formed on each of the photoconductor drums 21.

Each of the developing units 12 executes a developing process in the electrophotographic image forming process.

More specifically, the developing unit 12Y uses yellow (Y) toner to develop the electrostatic latent image formed on the photoconductor drum 21 of the drum unit 11Y. Thus, a yellow (Y) toner image is formed on the surface of the photoconductor drum 21 of the drum unit 11Y.

In addition, the developing unit 12M uses magenta (M) toner to develop the electrostatic latent image formed on the photoconductor drum 21 of the drum unit 11M. Thus, a magenta (M) toner image is formed on the surface of the photoconductor drum 21 of the drum unit 11M.

In addition, the developing unit 12C uses cyan (C) toner to develop the electrostatic latent image formed on the photoconductor drum 21 of the drum unit 11C. Thus, a cyan (C) toner image is formed on the surface of the photoconductor drum 21 of the drum unit 11C.

In addition, the developing unit 12K uses black (K) toner to develop the electrostatic latent image formed on the photoconductor drum 21 of the drum unit 11K. Thus, a black (K) toner image is formed on the surface of the photoconductor drum 21 of the drum unit 11K.

Note that each of the developing units 12 is supplied with toner from a toner container 31 (see FIG. 1) that contains toner of the corresponding color.

The transfer unit 14 executes a transfer process in the electrophotographic image forming process.

As shown in FIG. 2, the transfer unit 14 includes an intermediate transfer belt 41, a drive roller 42, a tension roller 43, four primary transfer rollers 44 (44Y, 44M, 44C, 44K) corresponding to the four printing colors, a secondary transfer roller 45, and a belt cleaning portion 46.

The intermediate transfer belt 41 is an endless belt member. The intermediate transfer belt 41 is stretched by the drive roller 42 and the tension roller 43 with a predetermined tension. The intermediate transfer belt 41 rotates in a belt rotation direction D2 shown in FIG. 2 as the drive roller 42 rotates upon receiving a rotational driving force supplied from a motor (not shown).

The primary transfer roller 44Y transfers the yellow (Y) toner image formed on the photoconductor drum 21 of the drum unit 11Y onto the intermediate transfer belt 41.

The primary transfer roller 44M transfers the magenta (M) toner image formed on the photoconductor drum 21 of the drum unit 11M onto the intermediate transfer belt 41.

The primary transfer roller 44C transfers the cyan (C) toner image formed on the photoconductor drum 21 of the drum unit 11C onto the intermediate transfer belt 41.

The primary transfer roller 44K transfers the black (K) toner image formed on the photoconductor drum 21 of the drum unit 11K onto the intermediate transfer belt 41.

The four color toner images are transferred onto the intermediate transfer belt 41 in a superimposed manner by the four primary transfer rollers 44. Thus, a color toner image is formed on the intermediate transfer belt 41.

The secondary transfer roller 45 transfers the color toner image formed on the surface of the intermediate transfer belt 41 onto a sheet supplied from the sheet feed portion 4.

The drum cleaning portion 23 of each drum unit 11 cleans the surface of the photoconductor drum 21 after the toner image has been transferred by the transfer unit 14.

The belt cleaning portion 46 cleans the surface of the intermediate transfer belt 41 after the toner image has been transferred by the secondary transfer roller 45.

The fixing unit 15 executes a fixing process in the electrophotographic image forming process. That is, the fixing unit 15 fixes the toner image transferred onto the sheet by the transfer unit 14 onto the sheet.

The sheet on which the toner image has been fixed by the fixing unit 15 is discharged to the sheet discharge tray 16.

In the image forming apparatus 100, each of the drum units 11 is provided detachably with respect to the housing of the image forming apparatus 100.

In addition, in the image forming apparatus 100, each of the drum unit 11 is provided with a substrate 52 (see FIG. 3) on which a non-volatile memory 51 (see FIG. 3) is mounted. Information about the drum unit 11 is stored in advance in the non-volatile memory 51 of the drum unit 11. In addition, information such as operating time of the drum unit 11 is recorded in the non-volatile memory 51 of the drum unit 11. For example, the non-volatile memory 51 is an EEPROM. The non-volatile memory 51 is an example of a non-volatile storage portion according to the present disclosure.

In addition, in the image forming apparatus 100, each of the developing units 12 is provided detachably with respect to the housing of the image forming apparatus 100.

In addition, in the image forming apparatus 100, each of the developing units 12 is provided with a substrate 52 (see FIG. 3) on which a non-volatile memory 51 (see FIG. 3) is mounted. The non-volatile memory 51 of the developing unit 12 stores information about the developing unit 12 in advance. In addition, information such as the operating time of the developing unit 12 is recorded in the non-volatile memory 51 of the developing unit 12.

The drum unit 11 and the developing unit 12 are an example of a plurality of units that share and execute a part of the image forming process in the present disclosure.

The control portion 61 controls each portion of the image forming portion 3. The control portion 61 includes a CPU, a ROM, and a RAM. The CPU is a processor that executes various types of calculation processes. The ROM is a non-volatile storage device that stores in advance information such as control programs for causing the CPU to execute various types of processes. The RAM is a volatile or non-volatile storage device used as a temporary storage memory (work area) for various types of processes executed by the CPU. The CPU controls each part of the image forming portion 3 by executing various types of control programs stored in advance in the ROM. Note that the control portion 61 may be configured with an electronic circuit such as an application specific integrated circuit (ASIC). In addition, the control portion 61 may also be the main control portion that controls the image forming apparatus 100 in an integrated manner.

The control portion 61 accesses the non-volatile memory 51 of each of the drum unit 11. More specifically, the control portion 61 records the operating time of the drum unit 11 in the non-volatile memory 51 of the drum unit 11. In addition, the control portion 61 reads information stored in the non-volatile memory 51 from the non-volatile memory 51 of the drum unit 11. For example, the control portion 61 predicts the timing for replacing the drum unit 11 based on information read from the non-volatile memory 51 of the drum unit 11.

In addition, the control portion 61 also accesses the non-volatile memory 51 of each of the developing units 12. More specifically, the control portion 61 records the operating time of the developing unit 12 in the non-volatile memory 51 of the developing unit 12. In addition, the control portion 61 reads information stored in the non-volatile memory 51 from the non-volatile memory 51 of the developing unit 12. For example, the control portion 61 predicts the timing for replacing the developing unit 12 based on information read from the non-volatile memory 51 of the developing unit 12.

Note that a substrate 52 may be provided in each of the optical scanning units 13, the transfer unit 14, or the fixing unit 15. In this case, the control portion 61 may access the non-volatile memory 51 of each of the optical scanning units 13, the non-volatile memory 51 of the transfer unit 14, or the non-volatile memory 51 of the fixing unit 15.

In the image forming apparatus 100, by connecting the control portion 61 and the plurality of non-volatile memories 51 with a single communication line, it is possible to suppress an increase in the number of ports of the control portion 61 compared to a configuration in which a communication line is provided for each non-volatile memory 51.

Here, in a configuration in which the control portion 61 and the plurality of non-volatile memories 51 are connected by a single communication line, it is necessary to assign different addresses to each of the non-volatile memories 51. Therefore, the circuit configuration of the substrate 52 needs to be changed for each substrate 52 on which the non-volatile memory 51 is mounted, and the number of types of substrates 52 included in the image forming apparatus 100 (the number of substrates 52 with different circuit configurations) increases.

In contrast, in the image forming apparatus 100 of the present embodiment according to the disclosure, as will be described below, it is possible to suppress an increase in the number of ports of the control portion 61 and also to suppress an increase in the number of types of substrates 52.

More specifically, as shown in FIG. 3, the image forming portion 3 includes a switching portion 71.

In addition, as shown in FIG. 3, the four non-volatile memories 51 corresponding to the four drum units 11 are connected to the switching portion 71 via a second communication line L2 (see FIG. 3).

Moreover, as shown in FIG. 3, the four non-volatile memories 51 corresponding to the four developing units 12 are connected to the switching portion 71 via a third communication line L3 (see FIG. 3).

Further, as shown in FIG. 3, the control portion 61 is connected to the switching portion 71 via a first communication line L1. In addition, the control portion 61 is also connected to the switching portion 71 via a changeover signal line L4 (see FIG. 3) that is used to input a switch changeover signal to the switching portion 71. The switch changeover signal is a 1-bit signal.

Each of the first communication line L1, the second communication line L2, and the third communication line L3 includes a data line and an address line.

The switching portion 71 switches the connection target connected to the control portion 61 via one first communication line L1 (see FIG. 3) between four non-volatile memories 51 corresponding to four drum units 11 and four non-volatile memories 51 corresponding to four developing units 12.

More specifically, the switching portion 71 is a switch IC that can switch the connection target connected to the first communication line L1 between the second communication line L2 and the third communication line L3 in accordance with the switch changeover signal input from the control portion 61.

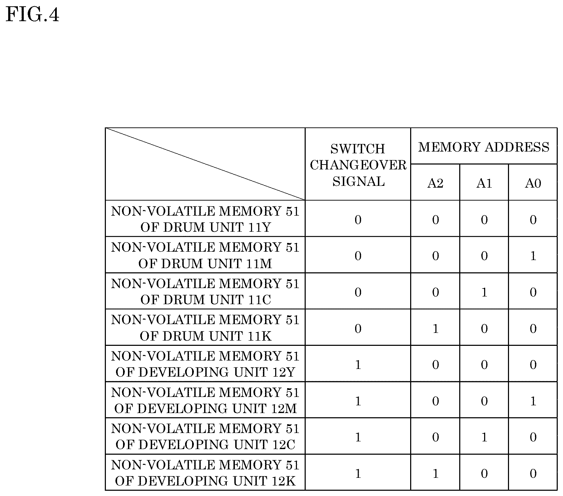

For example, in a case in which the switch changeover signal input from the control portion 61 is "0", the switching portion 71 connects the first communication line L1 and the second communication line L2. Thus, the control portion 61 and the four non-volatile memories 51 corresponding to the four drum units 11 are connected to each other so as to be able to communicate with each other (see FIG. 4).

In addition, in a case in which the switch changeover signal input from the control portion 61 is "1", the switching portion 71 connects the first communication line L1 and the third communication line L3. Thus, the control portion 61 and the four non-volatile memories 51 corresponding to the four developing units 12 are communicably connected (see FIG. 4).

Thus, it is possible to reduce the number of addresses required to specify an access target by half compared to a configuration in which the control portion 61 and eight non-volatile memories 51 (see FIG. 3) are connected by a single first communication line L1. That is, the same address can be assigned to the non-volatile memory 51 of any one of the drum units 11 and the non-volatile memory 51 of any one of the developing units 12. Therefore, it is possible to provide any one of the drum units 11 and any one of the developing units 12 with a substrate 52 having the same circuit configuration (the same type of substrate 52).

For example, in the image forming apparatus 100, the same address is assigned to two non-volatile memories 51 corresponding to the drum unit 11 and the developing unit 12 that share a common printing color (see FIG. 4). Thus, it is possible to reduce mistakes in assembling different types of substrates 52 when manufacturing the drum unit 11 or the developing unit 12, compared to a configuration in which different addresses are assigned to two non-volatile memories 51 corresponding to the drum unit 11 and the developing unit 12 that share a common printing color.

### [Other Embodiments]

Note that the unit according to the present disclosure may be the optical scanning unit 13 that executes the exposing process, the transfer unit 14 that executes the transfer process, or the fixing unit 15 that executes the fixing process. In other words, the plurality of units according to the present disclosure may be two or more of the drum unit 11, the developing unit 12, the optical scanning unit 13, the transfer unit 14, and the fixing unit 15.

In addition, the present disclosure may also be applied to a monochrome image forming apparatus that does not have a color image forming function.

Furthermore, the image forming process according to the present disclosure is not limited to an electrophotographic image forming process, but may be an inkjet image forming process or the like.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image forming apparatus (100), comprising:
a plurality of units (11, 12) configured to share in executing a part or all of an image forming process;
a control portion (61) configured to access a non-volatile storage portion (51) provided in each of the units (11, 12); and
a switching portion (71) configured to switch a connection target connected to the control portion (61) via one communication line (L1) between a plurality of the storage portions (51) corresponding to the plurality of the units (11, 12).

2. The image forming apparatus (100) according to claim 1, wherein
the image forming process includes a charging process and a developing process;
the plurality of units (11, 12) include a drum unit (11) configured to execute the charging process and a developing unit (12) configured to execute the developing process; and
the switching portion (71) switches the connection target between the storage portion (51) of the drum unit (11) and the storage portion (51) of the developing unit (12).

3. The image forming apparatus (100) according to claim 2 further comprising:
a plurality of the drum units (11) corresponding to a plurality of printing colors; and
a plurality of the developing units (12) corresponding to the plurality of the printing colors; wherein
the switching portion (71) switches the connection target between the plurality of storage portions (51) corresponding to the plurality of drum units (11) and the plurality of storage portions (51) corresponding to the plurality of developing units (12).

4. The image forming apparatus (100) according to claim 3, wherein a same address is assigned to two storage portions (51) corresponding to the drum unit (11) and the developing unit (12) that share the printing color.
